# EUROPEAN PATENT APPLICATION

(11) **EP 4 299 794 A1**
(43) Date of publication of application: **03.01.2024**
(21) Application number: 22181783.6
(22) Date of filing: 29.06.2022
(51) Int. Cl.: C25B 1/04, C25B 9/01, C25B 9/015, C25B 9/05, C25B 9/65, C25B 11/02

(54) **ELECTROLYSIS DEVICE**

(71) Applicant: DAES SA, 1213 Petit Lancy Geneva (CH)
(72) Inventor: PLEWINSKI, François, 1213 Petit-Lancy (CH)
(74) Representative: KATZAROV S.A.

(57) **Abstract**

The invention relates to a high pressure electrolyzer module comprising a first external electrode which has a shape permitting to define a delimited volume, a second inner electrode provided inside the delimited volume defined by the first external electrode, an electrolyte provided under high pressure inside the first external electrode and an electrical power source, wherein the electrical power source is controlled so as to alternate potential to the first and second electrodes such that they are alternatively submitted to oxidation and reduction.

## Description

### Technical Field

The present invention relates to an electrochemical hydrogen and oxygen generation and storage device and method and more particularly to an electrolysis device and even more particularly to a membrane-less electrolyzer and its use in a solar energy collecting and transforming device.

### Background of the art

It is well known that an electrolysis is a process by which electric current is passed through a substance to effect a chemical change. The chemical change is one in which the substance loses or gains an electron (oxidation or reduction). The process is carried out in an electrolytic cell, an apparatus consisting of positive and negative electrodes held apart and dipped into a solution containing positively and negatively charged ions.

In the same manner, an electrolyzer is a system that uses electricity to break water into hydrogen and oxygen in an electrolysis process. In this process, the current is applied to the anode and cathode across a Proton Exchange Membrane (PEM) and causes the water (H₂O) to split into its component molecules, hydrogen (H₂) and oxygen (O₂).

Water electrolysis is popular because it is one of the simplest methods used for hydrogen production. It has the advantage of being able to produce hydrogen using only renewable energy. In fact, the water electrolysis for hydrogen production has many advantages, the first one is the simple process: only water and electricity are required to produce hydrogen.

Due to their potential for simple construction, membrane-less electrolyzers represent a promising approach to driving down capital costs to the levels required for water electrolysis to compete with steam methane reforming.

Usually, the purpose of the membrane is to separate the anode loop (anolyte) from the cathode loop (catholyte), to avoid unwanted secondary reactions, to combine the electrode reaction with a separation step or to isolate separately the products formed on the electrode.

Despite its vital roles in PEM electrolyzer operation, the membrane brings with it disadvantages, including the need for a complex Membrane Electrode Assembly (MEA) architecture and the risk of device failure due to membrane fouling or degradation in the presence of impurities. Besides directly affecting device lifetime and/or maintenance costs, the issue of membrane durability also affects the capital costs of electrolyzer systems by placing stringent requirements on water purity and materials used within the electrolyzer system

Membrane-less electrolyzers utilize fluidic forces instead of solid barriers for the separation of electrolysis gas products. These electrolyzers have low ionic resistance, a simple design, and the ability to work with electrolytes at different pH values. In these electrolyzers, gas products are being produced in the outer channels.

However, the conventional membrane-less water electrolyzer main disadvantage is the need for an alternating potential to the active and passive electrodes in each module during the cyclic feeding.

Document WO2019193282 discloses a conventional method and device for the electrochemical compression of gaseous hydrogen. In this document the invention essentially consists in implementing an electrical generator, a chamber containing an electrolyte, and a plurality of hydrogen electrode EH / counter-electrode CE pairs, and optionally, at least one separator arranged between EH et CE, in which the electrolyte contains at least one intermediate vector A, which is the oxidant of a redox couple (A/B), and the following is implemented: a step of injection of hydrogen at P° such that at the anode EH: H₂ → 2H+ + 2e⁻, and at the cathode CE: A + ne⁻→ B where n=1-10; and a step comprising a reversal of polarity for EH and CE for inducing an electrochemical transformation, such that at the anode CE: B → A + ne- where n=1-10, and at the cathode EH: 2H⁺ + 2e⁻ → H₂, said hydrogen accumulating in the chamber at a pressure P1 > P° and n.

On the other hand, document WO2019082174 discloses a method and device for conversion of water into peroxide hydrogen wherein a corona discharge zone is generated between a rotating electrode formed as a hollow rotor of a centrifugal fan and a fixed electrode. The rotating electrode is rotated relative to an insulation layer of the fixed electrode, and high voltage AC power is applied to the fixed electrode while conveying vapor through the corona discharge zone.

However, the conventional membrane-less water electrolyzer of these documents have the serious drawback of needing a continuous alternating potential to the active and passive electrodes in each module during the cyclic feeding coming from an external power supply.

Therefore, there exists a need for a new type of process and device permitting to achieve membrane-less water electrolysis in a simple, reliable, and cost-effective manner.

In this regard, a primary object of the invention is to solve the above-mentioned problems and more particularly to provide a device converting electrical energy into chemical energy to ensure the continuity of the process.

Another object of the invention is to provide a high pressure electrolyzer with enhanced efficiency and improved solidity.

A further object of the invention is to provide an improved and modular solar panel.

### Summary of the invention

The above problems are solved by the present invention which is a membrane-less electrolyzer which is continuously alimented by an energy source, preferably solar cells which provide the electricity needed for the electrolyzer to function without needing an external power supply and by the system architecture which ensures the alternating potential and the continuity of the process.

The electrolyzer of the present invention provides continuity of the process thanks to an inverter circuit connected to the electrodes.

Thanks to this, the active electrode is alternatively oxidized when receiving ionic electric charges from the cathode and reduced when receiving ionic electric charges from the anode. The water electrolysis for hydrogen production has many advantages, the first one is the simple process: only water and electricity are required to produce hydrogen.

A first aspect of the invention is a high pressure electrolyzer module comprising a first external electrode which has a shape permitting to define a delimited volume, a second inner electrode provided inside the delimited volume defined by the first external electrode, an electrolyte provided under high pressure inside the delimited volume defined by the first external electrode and an electrical power source, wherein the electrical power source is controlled so as to alternate potential to the first and second electrodes such that they are alternatively submitted to oxidation and reduction.

According to a preferred embodiment, the electrodes constitute mini tubes presenting a geometry which is chosen from the group comprising straight, serpentine, clarinet network or spiral shapes.

Advantageously, the second inner electrode can have a form chosen in the group comprising a rod, an inner tube and a rod-like elongated metallic mesh surrounded by a porous Nickel, Zinc or Copper alloys or foam.

Preferably, electrical source power is controlled so as to alternate potential between two phases wherein in a first phase, electrons are sent to the first external electrode which is reduced such that hydrogen is released at its surface, the electrolyte transfers the electrons to the second inner electrode such that the second inner electrode is oxidized and when the oxidation state of the second inner electrode saturates and increases the global electrical resistance of the system, the current is switched by the control system and the second phase starts, where electrons are sent to the second inner electrodes which is reduced until reaching its initial state, the electrolyte transfers the electron to the first external electrode such that oxygen is released at the first external electrode surface, and after a few minutes, when the reduction of the second inner electrode is complete, the current is switched by the control system such that first phase restarts.

Preferably, the electrolyzer is a membrane-less electrolyzer.

Advantageously, the electrolyte comprises 20 to 30% KOH or NaOH in Hight pressure water.

Preferably, the electrical power source comprises at least one photovoltaic cell. An advantage of this embodiment is that the solar cell provides the electricity needed for the electrolyzer to function without needing an external power supply.

According to a preferred embodiment, the electrolyzer module further comprises a substrate in which the electrodes are provided, wherein said substrate comprises a thermal conductor material and an electrical isolator material.

Advantageously, the thermal conductor material may be composed of Aluminum, copper, iron or stainless steel, while the electrical isolator material is preferably Rubber, polyethylene or the same.

According to a preferred embodiment, the electrolyzer module further comprises an electrical circuit connecting the electrical power source to the electrodes, which comprises an inverter.

Preferably, the electrical circuit comprises H-bridge circuits including two pairs of switches.

A second aspect of the invention is a solar panel comprising several electrolyzer modules according to the first aspect of the invention embedded at its back wherein the electrical power source comprises two or three photovoltaic cells per electrolyzer module, wherein the thermal conductor material is provided between the solar cells and the electrodes.

Advantageously, the electrolyzer modules are mounted electrically in parallel together and a single inverter is provided for the whole panel.

Preferably, the electrolyzer modules are mounted electrically in serries together and an inverter is provided for each module.

The solar panel comprises a substrate in which is provided the membrane-less water electrolyzer of the first aspect directly connected to low voltage solar cells. The panel is adapted to convert solar energy into electrical energy and then electrical energy into chemical energy. The reactant involved is water and the products are oxygen and hydrogen gas.

An advantage of the second aspect is that the solar cells of the panel ensure the continuity of the process unlike conventional water electrolyzers. Therefore, by using solar energy as the very first energy source, the active electrode is alternatively oxidized when receiving ionic electric charges from the cathode and reduced when receiving ionic electric charges from the anode.

A third aspect of the invention is an electrolyte circuit comprising a high-pressure pump which is optional since, this first step pressurization is optional, pressurizing and feeding the electrolyte into the circuit, a second pump which is also optional since this second pump is optional depending on the configuration/placement, pushing the electrolyte through the electrolyzer module of the first aspect of the invention. A 3-way valve provided at the exhaust of the electrolyzer module, adapted to be switched when the control system switches polarity to collect pressurized hydrogen or oxygen into dedicated pressure tanks. This system facilitates the separation of the produced gas from water (Hydrogen and oxygen) and avoids the mixture of hydrogen and oxygen in the mini tube.

A further advantage is that the system architecture ensures the alternating potential and the continuity of the process. Indeed, the circulating water is first pressurized by a pump which is optional since this first step pressurization is optional feeding the water circuit and water is pushed through the electrolyzer by a second pump which is also optional since this second pump is optional depending on the configuration/placement; this system facilitates the separation of hydrogen from water at the mini tube exhaust during the first phase (respectively Oxygen in the second phase). The 3-ways valve at the exhaust of the electrolyzer is switched when the control system switches between first and second phases, to collect the pressurized hydrogen (and separately in time, the oxygen), into dedicated pressure tanks.

In this manner, low voltage solar cells are directly connected to the electrolyzer, which is embedded at the back of the panel.

Advantageously, this configuration of electrodes having the shape of mini tubes embedded inside the back of a solar panel between a thermal conductor and an electrical isolator allows high pressure electrolysis in cheap and robust systems (mini tubes) and an enhanced efficiency by preheating the circulating water by the thermal heat coming from the inefficiency of the solar power conversion.

This embodiment is particularly adapted for domestic and industrial usage.

### Brief description of the drawings

Further particular advantages and features of the invention will become more apparent from the following non-limitative description of at least one embodiment of the invention which will refer to the accompanying drawings, wherein
- Figure 1 schematically represents an electrolyzer according to a preferred embodiment of the invention.
- Figure 2 schematically represents the electrical circuit feeding the electrolyzer according to a preferred embodiment of the invention.
- Figure 3 represents a first phase HiPHEL Low Power integrated in solar panel according to a second aspect the invention
- Figure 4 represents a global circuit schematic view of a HiPHEL Low Power integrated in solar panel according to the second aspect the invention

### Detailed description of the invention

The present detailed description is intended to illustrate the invention in a non-limitative manner since any feature of an embodiment may be combined with any other feature of a different embodiment in an advantageous manner.

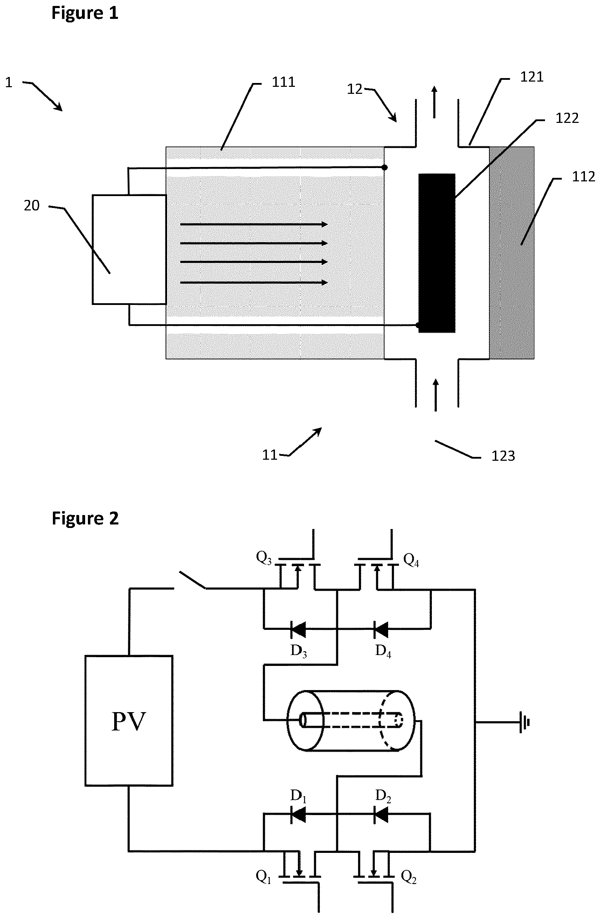

Figure 1 shows a schematic view of the first aspect of the invention which is a membrane less electrolyzer module 1 comprising a substrate 11, made of a thermal conductor material 111 and an electrical isolator material 112, in which is provided an electrolyzer 12 composed of a first electrode 121, a second electrode 122 and an electrolyte 123, preferably 20 to 30% concentrated electrolyte (KOH or NaOH) in high-pressure water, in a volume provided between said electrodes 121, 122.

The thermal conductor material 111 may be composed of Aluminum, copper or an equivalent thermal conductor, while the electrical isolator material 112 is preferably Rubber, polyethylene or the same.

The first electrode 121 is an external electrode which has a shape permitting to define a delimited volume within it such as a cylindric tube or the same and is adapted to act as a passive electrode. The external electrode's thickness is adapted to provide the needed resistance for the maximum pressure of the fluids.

The second electrode 122 is an inner electrode provided inside the delimited volume defined by the first external electrode 121 and has the shape of an inner tube or rod or the same and is adapted to act as an active electrode. According to another embodiment, the inner electrode 122 can have the form of a rod-like elongated metallic mesh surrounded by a porous Nickel, Zinc or Copper alloys or foam. This design has been proven to increase the electrochemical performance such as the ohmic resistance and the charge transfer resistance.

According to the preferred embodiment, the first and second electrodes 121, 122 are provided such that they both extend in a straight and parallel direction with the first electrode 121 being a tube into which the second electrode 122 extends with the electrolyte 123 flowing under high pressure inside the first electrode 121. For basic scientific questions, it is important that the first and second electrodes 121, 122 do not enter in contact with each other to prevent short-circuit, however, since the electrolyte 123 between them is under high-pressure, the internal electrode 122 is maintained in the center thanks to electric insulators, also to control keep the electrolyte electric resistance constant in all radial directions.

Upon use, thanks to an electrical circuit comprising an inverter, the active electrode 122 is adapted to be alternatively submitted to oxidation according to a first phase and to reduction according to a second phase and in the meantime, the passive electrode 121 is adapted to alternatively submit the electrolyte at its surface to reduction according to a first phase and to oxidation according to a second phase.

Figure 2 shows a schematic diagram representing the electric circuit controlling the electrodes. Here the electrical energy source is a PV panel, but the invention should not be limited by this. Both the first and the second electrodes are connected to the energy source. The electrical circuit is based on the H-bridge. The operating mode is meant to reverse the polarity between the power supply and the ground which is conditioned by the switches chosen to operate. The main advantage of the H-bridge circuits is alternating potential to the active and passive electrodes in each module during the cyclic feeding. Depending on which switches are on (Q1 and Q4) or (Q2 and Q3), the current between the power source and the ground changes defining the cycle that is taking place.

This arrangement provides commutation property to the electrolyzer 12 to inverse polarity of the electrodes 121, 122 and reverse the reaction thereby creating alternatively H₂ and O₂ under high-pressure.

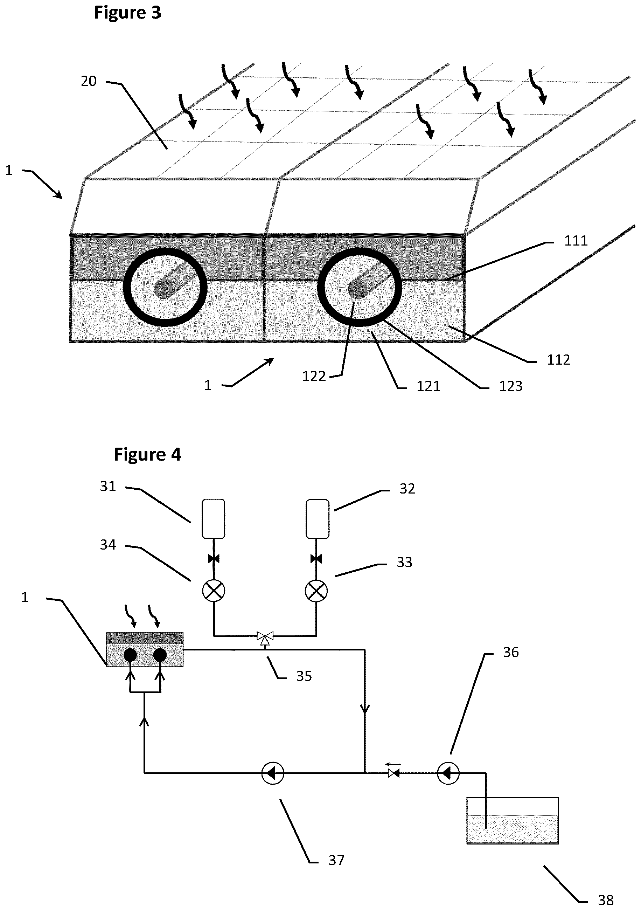

Figure 3 shows a second aspect of the invention which is an assembly 10 where a panel 20 of low voltage solar cells 21 is directly connected to the electrolyzer 12 of the first aspect of the invention described above.

As illustrated, the electrolyzer 12 is embedded at the back of the panel 20 which acts as an electric energy source as well as heat source. Indeed, since the substrate 11 comprises a thermal conductor 111 between the electrolyzer 12 and the PV cells 21 and an isolator 112 behind the electrodes, the solar heat can be easily transmitted to the electrolyzer 12 thereby preheating it.

An electrolyzer module 1 necessitates approximately 1.5V for carrying out the electrolysis and a PV cell generates approximately 0.5V. Therefore, an electrolyzer module 1 may comprise one electrolyzer 12 with three PV cells 21, for example Silicon cells.

Nowadays, a solar panel will comprise about three zones of twenty cells where the cells are mounted in series in each zone. The problem with this, is that a single cell dysfunction will lower the efficiency of the whole zone.

Therefore, to produce a full solar panel, several electrolyzer modules 1 may be mounted with each other electrically in parallel, to obtain twenty zones of three cells.

The geometry of the electrodes 121, 122 may vary. According to a preferred embodiment, the two electrodes may have a straight shape but alternatively they may have serpentine or spiral shapes or the same within one module.

Mounting the electrolyzer modules 1 together may be done through two options. Keeping in mind that an electrolyzer module 1 comprises 2/3 PV cells and one electrolyzer 12, the electrolyzer 12 of the several modules 1 are mounted hydraulically in parallel (or in series), while they may be mounted electrically in parallel in which case a single inverter is sufficient for the whole panel, or electrically dissociated which means that each module has his own inverter.

We will now describe the two alternating phases in more details.

The first phase consists in the reduction of the electrolyte at the surface of the passive electrode 121 and the oxidation of the active electrode 122 and the generation of molecular hydrogen H₂.

During this first phase, the solar cells 21 receive solar energy and generate electrons according to a conventional process. The electrons generated by the solar cells 21 are sent to the external passive electrode 121 of the electrolyzer module 1 into which pressurized water 123 circulates such that the external passive electrode 121 is reduced and acts as a cathode and triggers an electrolysis process such that hydrogen is released at this external electrode.

In the meantime, the inner active electrode 122 collects the electrons which are sent back in the electrical circuit (see figure 2). The inner active electrode 122 is therefore oxidized and acts as an anode.

After a certain period, such as few minutes, when the oxidation state of the inner active electrode 122 saturates and increases the global electrical resistance of the system, a sensor detects the resistance and informs the control system which then orders to switch the current. Therefore, the current is switched by the control system as explained in reference to figure 2 and the second phase starts.

The second phase consists in the reduction of active electrode 122 and the oxidation of the electrolyte at the surface of the passive electrode 121 and generation of molecular oxygen O₂.

During this second phase, electrons generated by the solar cells 21 are sent to the inner active electrode 122: this electrode 122 plays the role of the cathode and is reduced until going back to its initial state, i.e., state at start of 1^{st} phase.

The electrolyte 123 transfers the electrons to the external passive electrode 121 which is now the anode. The oxygen is released at the anode surface while the electrons are collected at this passive electrode (anode).

After a few minutes, when the reduction of the active electrode 122 is complete, the current is switched by the control system and the first phase restarts thereby being continuous.

This permits to produce both H₂ and O₂ with the same device. The storage of O₂ may be used by fuel cells for example.

Figure 4 shows a schematic view of the global circuit, where we can see that the electrolyte 123, i.e., the circulating water, is first pressurized by a high-pressure pump 36 feeding the whole electrolyte circuit. Then, the electrolyte 123 is pushed through the mini tubes (the electrodes 121, 122) of the electrolyzer module 1 by a second pump 35 (this second pump is optional depending on the configuration/placement).

This system facilitates the separation of hydrogen from water at the electrolyzer module 1 exhaust during the first phase (respectively Oxygen in the second phase). Indeed, a 3-way valve 35 is provided at the exhaust of the electrolyzer module 1 which can be switched when the control system switches between first and second phases, to collect the pressurized hydrogen (and separately in time, the oxygen), into dedicated pressure tanks 31, 32. After passing through the liquid-gas separator 33, 34.

This configuration of an electrolyzer 12 embedded inside the back of the solar panel 20 and a thermal managing substrate 11 allows high pressure in cheap and robust systems provided by the mini-tube arrangement of the first and second electrodes 121, 122 as well as enhanced efficiency by preheating the circulating water by the thermal heat coming from the solar heat dissipated inside the substrate 11.

While the embodiments have been described in conjunction with several embodiments, it is evident that many alternatives, modifications, and variations would be or are apparent to those of ordinary skill in the applicable arts. Accordingly, this disclosure is intended to embrace all such alternatives, modifications, equivalents, and variations that are within the scope of this disclosure. This for example particularly the case regarding the different apparatuses which can be used.

## Claims

1. High pressure electrolyzer module (1) comprising a first external electrode (121) which has a shape permitting to define a delimited volume, a second inner electrode (122) provided inside the delimited volume defined by the first external electrode (121), an electrolyte (123) provided under high pressure inside the delimited volume defined by the first external electrode (121) and an electrical power source (20), wherein the electrical power source (20) is controlled so as to alternate potential to the first and second electrodes (121, 122) such that they are alternatively submitted to oxidation and reduction.

2. Electrolyzer module according to claim 1, **characterized in that** the electrodes (121, 122) constitutes mini tubes presenting a geometry which is chosen from the group comprising straight, serpentine, clarinet network or spiral shapes.

3. Electrolyzer module to claim 1 or 2, **characterized in that** the second inner electrode (122) can have a form chosen in the group comprising a rod, an inner tube and a rod-like elongated metallic mesh surrounded by a porous Nickel, Zinc or Copper alloys or foam.

4. Electrolyzer module according to any one of claims 1 to 3, **characterized in that** electrical source power (20) is controlled so as to alternate potential between two phases wherein in a first phase, electrons are sent to the first external electrode (121) which allows the electrolyte at its surface to be reduced such that hydrogen is released at its surface, the electrolyte (123) transfers the electrons to the second inner electrode (122) such that the second inner electrode (122) is oxidized and when the oxidation state of the second inner electrode (122) saturates and increases the global electrical resistance of the system, the current is switched by the control system and the second phase starts, where electrons are sent to the second inner electrodes (122) which is reduced until reaching its initial state, the electrolyte (123) transfers the electron to the first external electrode (121) such that oxygen is released at the first external electrode surface (121), and after a few minutes, when the reduction of the second inner electrode (122) is complete, the current is switched by the control system such that first phase restarts.

5. Electrolyzer module according to any one of claims 1 to 4, **characterized in that** the electrolyzer (12) is a membrane-less electrolyzer.

6. Electrolyzer module according to any one of claims 1 to 5, **characterized in that** the electrolyte (123) comprises 20 to 30% KOH or NaOH in Hight pressure water.

7. Electrolyzer module according to any one of claims 1 to 6, **characterized in that** the electrical power source (20) comprises at least one photovoltaic cell.

8. Electrolyzer module according to any one of claims 1 to 7, **characterized in that** it further comprises a substrate (11) in which the electrodes (121, 122) are provided, wherein said substrate (11) comprises a thermal conductor material (111) and an electrical isolator material (112).

9. Electrolyzer module according to claim 8, **characterized in that** the thermal conductor material (111) may be composed of Aluminum, copper, iron or an equivalent thermal conductor, while the electrical isolator material (112) is preferably Rubber, polyethylene or the same.

10. Electrolyzer module according to any one of claims 1 to 9, **characterized in that** it further comprises an electrical circuit connecting the electrical power source (20) to the electrodes (121, 122), which comprises an inverter.

11. Electrolyzer module according to claim 10, **characterized in that** the electrical circuit comprises H-bridge circuits including two pairs of switches (Q1, Q2; Q3, Q4)

12. Solar panel comprising several electrolyzer modules (1) according to any one of claims 1 to 11 embedded at its back wherein the electrical power source (20) comprises two or three photovoltaic cells per electrolyzer module, wherein the thermal conductor material (111) is provided between the solar cells (20) and the electrodes (121, 122)

13. Solar panel according to claim 12, **characterized in that** the electrolyzer modules (1) are mounted electrically in parallel together and a single inverter is provided for the whole panel.

14. Solar panel according to claim 12 or 13, **characterized in that** the electrolyzer modules (1) are mounted electrically in serries together and an inverter is provided for each module.

15. Electrolyte circuit comprising a high-pressure pump (36) pressurizing and feeding the electrolyte (123) into the circuit, a second pump (37) pushing the electrolyte (123) through the electrolyzer module (1) of any one of claims 1 to 11, a 3-way valve (35) provided at the exhaust of the electrolyzer module (1), adapted to be switched when the control system switches polarity to collect pressurized hydrogen or oxygen into dedicated pressure tanks (31, 32).
